# EUROPÄISCHE PATENTANMELDUNG

(11) **EP 0 562 448 A1**
(43) Veröffentlichungstag der Anmeldung: **29.09.1993**
(21) Anmeldenummer: 93104413.5
(22) Anmeldetag: 18.03.1993
(51) Int. Cl.: B32B 27/36, B32B 7/06, C09J 7/02

(54) **Abgedeckte drucksensitive selbstklebende Träger und Verfahren zu deren Herstellung**

(30) Priorität: 25.03.1992 DE 4209676
(71) Anmelder: HOECHST AKTIENGESELLSCHAFT, D-65926 Frankfurt am Main (DE)
(72) Erfinder: Beer, Ekkehard, W-6208 Bad Schwalbach (DE); Rentzsch, Tobias, W-6380 Bad Homburg (DE)

(57) **Zusammenfassung**

Es wird ein Verfahren zur Herstellung abgedeckter drucksensitiver selbstklebender Träger beschrieben, wobei der Träger auf der drucksensitiv selbstklebend ausgerüsteten Oberfläche mit einer geprägten Prägefolie abgedeckt ist.

## Beschreibung

Die Erfindung betrifft selbstklebend ausgerüstete und drucksensitiv eingestellte Materialien (Klebebänder), die auf ihrer selbstklebenden Oberfläche mit einer Abdeckung versehen sind, welche sich leicht entfernen läßt, kein Silikon enthält, hochfest ist und recyclebar ist.

Selbstklebend ausgerüstete sowie drucksensitiv eingestellte Materialien (bspw. Klebebänder) müssen häufig während des Herstellungsprozesses, Transports und bei der Lagerung an ihrer (klebe)aktiven Oberfläche reversibel abgedeckt werden, um ein Verkleben mit sich selbst zu verhindern. Darüber hinaus ermöglichen solche Abdeckungen beispielsweise eine gezielte Einstellung des Abrollwiderstandes, was insbesondere beim maschinellen Einsatz von Klebebandrollen in automatischen Verpackungsanlagen von ausschlaggebender Bedeutung ist.

Übliche reversible Abdeckungen enthalten gewöhnlich silikonhaltige Beschichtungen, die kleberabweisend sind. Solche silikonhaltigen Abdeckungen weisen jedoch eine Reihe von Nachteilen auf. Zum einen läßt sich nicht generell ausschließen, daß Spuren des Silikons beim Abziehen der Abdeckung an der Kleberschicht haften bleiben, wodurch die Haftung des Klebers im Kontakt zu einem neuen Untergrund reduziert wird. Zum anderen stehen die Silikone einer Rückgewinnung des reinen als Träger (Abdeckung) verwendeten Materials im Wege. Eine Entsorgung derartig silikonisierter Materialien ist nur über Deponieren oder Verbrennen möglich. Eine thermische Umformung scheidet bei silikonhaltigem Material aus.

Es bestand deshalb die Aufgabe, eine Abdeckung für Klebebänder zur Verfügung zu stellen, die von ihrem Eigenschaftsprofil her silikonisierten-Trägern in nichts nachsteht, jedoch die obenbeschriebenen Nachteile der silikonisierten Träger nicht aufweist.

Gelöst wird diese Aufgabe durch einen abgedeckten drucksensitiven selbstklebenden Träger, der auf der drucksensitiv selbstklebend ausgerüsteten Oberfläche mit einer geprägten Prägefolie abgedeckt ist.

Die Erfindung betrifft weiterhin ein Verfahren zur Herstellung der abgedeckten Träger sowie die Verwendung einer geprägten Prägefolie als Abdeckfolie für selbstklebende Träger.

Drucksensitive selbstklebende Träger sind hinlänglich bekannt und beispielsweise in der EP-A-0 028 771 beschrieben. Prägbare Polyesterfolien sind ebenfalls bekannt (EP-A-0 115 033). In der nicht vorveröffentlichten deutschen Anmeldung P 41 33 142.7 wird vorgeschlagen, die geprägte Prägefolie gemäß EP-A-0 115 033 als Trennfolie zur Herstellung oberflächlich strukturierter, dekorativer Schichten einzusetzen. Ein Hinweis auf einen möglichen Einsatz solcher geprägten Folien als Abdeckung für selbstklebende Träger findet sich nicht.

Unter Abdeckung im erfindungsgemäßen Sinn wird ein Material verstanden, welches die Klebeschicht eines haftend ausgerüsteten Trägers schützt und auf Wunsch entfernt werden kann, ohne die Klebeschicht und/oder den Träger zumindest wesentlich zu schädigen.

Unter Träger wird ein Gebilde verstanden, welches zumindest auf einer Oberfläche mit einer selbstklebenden Beschichtung versehen ist, welche den Träger durch einfache Ausübung von Druck (drucksensitiv) mit einem Substrat mehr oder weniger fest verbindet. Im besonderen wird unter Träger eine Klebebandfolie verstanden, die gewöhnlich aus einen ein- oder mehrlagigen thermoplastischen Kunststoff wie Polyvinylchlorid, Polypropylen oder Polyethylenterephthalat besteht und einseitig mit einem drucksensitiven Kleber beschichtet ist. Drucksensitiv heißt hierbei, daß die Klebewirkung ohne Temperaturerhöhung oder zuzusetzende Additive durch einfache Druckeinwirkung erzielt wird (selbstklebend).

Grundlage der Erfindung ist eine prägbare, gestreckte und thermofixierte Mehrschichtfolie aus Polyestern mit unterschiedlichen Schmelzpunkten, umfassend zwei außenliegende Polyesterschichten aus Polyethylenterephthalat, zwischen die eine niedriger schmelzende Polyesterschicht aus Copolyestern mit Ethylenterephthalat und Ethylenisophthalateinheiten eingebettet ist. Eine solche prägbare Mehrschichtfolie ist in der EP-A-0 115 033 beschrieben, auf die an dieser Stelle ausdrücklich Bezug genommen wird. Sie kann beispielsweise als ungeprägte Folie auf einen Träger, beispielsweise einen Bucheinband, aufkaschiert und anschließend unter Druck- und Temperatureinwirkung geprägt werden, wodurch ein gewünschtes reliefartiges Muster entsteht.

Es wurde nun überraschend gefunden, daß sich diese prägbare Folie hervorragendals Abdeckfolie für drucksensitive selbstklebende Träger eignet. Dazu wird die prägbare Folie gemäß EP-A-0 115 033 mit dem gewünschten Muster, beispielsweise kleinen, gleichmäßig über die Folienoberfläche verteilten Erhebungen, geprägt. Der Vorteil bei dieser Folie ist insbesondere darin zu sehen, daß sie
a) nicht silikonhaltig ist,
b) die geringe Haftung zwischen Kleberschicht und Abdeckfolie durch Minimierung der Kontaktfläche erreicht (kleine Erhebungen),
c) hochfest ist, und
d) sortenrein und somit recyclefähig ist.

Die prägbare Polyesterfolie ist eine Mehrschichtfolie, deren kennzeichnende Merkmale darin zu sehen sind, daß die Folie biaxial gestreckt ist und, daß die Zwischenschicht aus einem Copolyester besteht, der zwischen 5 und 95 Gew.-% Ethylenisophthalateinheiten enthält. Es ist bevorzugt, daß die außenliegende Polyesterschicht, von der die Prägung ausgehend vorgenommen wird, in ihrer Stärke dünner ist als die zweite außenliegende Polyesterschicht.

Es hat sich gezeigt, daß durch Abdeckung der den niedrigeren Schmelzpunkt aufweisenden Mittelschicht durch die höher schmelzenden Polyesterschichten die Verprägbarkeit sehr gut ist, daß keine Klebeneigung zum Werkzeug während des Prägevorganges entsteht und daß höhere Temperaturen beim Prägevorgang angewandt werden können, so daß die Prägetiefe auch bei Belastung bei höheren Temperaturen erhalten bleibt.

In bevorzugter Weise wird für die Außenschicht Polyethylenterephthalat mit einer Schmelztemperatur zwischen 240 und 260 °C und für die Zwischenschicht ein Copolyester mit einer Schmelztemperatur zwischen 190 und 230 °C eingesetzt.

Die Mehrschichtfolie besitzt bevorzugt einen asymmetrischen Aufbau; dabei ist die außenliegende Polyesterschicht, von der aus die Prägung vorgenommen wird, in ihrer Stärke dünner als die zweite außenliegende Polyesterschicht, welche der Seite, von der die Prägung vorgenommen wird, gegenüber angeordnet ist. Die Dicke der Mehrschichtfolie beträgt 5 bis 1000 µm, vorzugsweise 10 bis 350 µm, besonders bevorzugt 10 bis 200 µm. Dabei weist die außenliegende Polyesterschicht, von der die Prägung ausgehend vorgenommen wird, eine Dicke von wenigstens 0,01 µm auf, bevorzugt von 0,1 bis 10 µm, ganz besondere bevorzugt von 0,1 bis 5 µm. Die Dicke der Zwischenschicht beträgt wenigstens 0,5 µm, bevorzugt liegt sie zwischen 1 und 100 µm, besonders bevorzugt zwischen 2 und 40 µm. Die zweite außenliegende Polyesterschicht, welche der Seite, von der die Prägung vorgenommen wird, gegenüber angeordnet ist, weist eine Dicke von wenigstens 1 µm auf, bevorzugt von 1 bis 100 µm, besonders bevorzugt von 5 bis 50 µm.

Bevorzugt ist außerdem, daß die als Zwischenschicht eingesetzten Copolyester zwischen 5 und 50 Gew.-% Ethylenisophthalateinheiten enthalten.

Die Polyesterzwischen- und -außenschichten werden nach den üblichen, allgemein bekannten Verfahren coextrudiert, biaxial gestreckt und thermofixiert.

Bei der Prägung der Mehrschichtfolie geht man am besten so vor, daß man die Folie unter ausreichendem Druck in Kontakt mit einer strukturierten Fläche, bevorzugt einer Walze, bringt, deren Struktur sich dann auf die Dreischichtfolie überträgt.

Als geeignete Strukturen haben sich gleichmäßig über die gesamte Länge und Breite der Prägefolie verteilte punkt- oder linienförmige Erhebungen von 5 bis 50 µm Höhe und einem mittleren Durchmesser beziehungsweise Breite von 5 bis 20 µm erwiesen. Die Anzahl dieser Erhebungen pro mm² sollte - je nach Durchmesser/Breite - ca. 100 bis 25 betragen. Zur Erzeugung von linienförmigen Erhebungen kann man der Prägefolie ein rillen- bzw. wellenartiges Profil, beispielsweise in Form von z.B. konzentrischen Ringen, etc. verleihen. Entscheidend ist, daß die Gesamtkontaktfläche durch Eindrücken (Prägen) von Flächenbereichen verringert wird, so daß eine nur punkt- bzw. stegförmige Erhebungen tragende Oberfläche entsteht. Die Form dieser Prägung spielt hierbei eine untergeordnete Rolle.

Das Aufbringen der Abdeckung auf die drucksensitiv selbstklebend ausgerüstete Oberfläche erfolgt zweckmäßig durch Kontaktieren beider Oberflächen. Im Falle von selbstklebend ausgerüsteten Klebebändern wird die Abdeckung zweckmäßigerweise als gleichbreites Folienband dem Klebeband nach dessen Herstellung kurz vor der Aufrollung auf der mit Klebstoff ausgerüsteten Seite zugeführt und zusammen mit dem Klebeband aufgerollt.

Gegenüber herkömmlichen Abdeckungen für selbstklebende Träger oder auch gegenüber Klebebändern, die selbst auf der Rückseite mit einem Antihaftmittel ausgerüstet sind, weist die erfindungsgemäße Kombination von geprägter Abdeckfolie und Klebeband die folgenden Vorteile auf:
a) das Gesamtsystem ist silikonfrei,
b) die Abdeckfolie kann wiederverwendet bzw. recycliert werden,
c) die Haftkraft zwischen selbstklebendem Träger und Abdeckfolie kann durch entsprechende Prägung der Abdeckfolie in weiten Grenzen eingestellt werden,
d) die verwendete Abdeckfolie ist hochfest.

## Patentansprüche

1. Abgedeckter drucksensitiver selbstklebender Träger, dadurch gekennzeichnet, daß der Träger auf der drucksensitiv selbstklebend ausgerüsteten Oberfläche mit einer geprägten Prägefolie abgedeckt ist.

2. Abgedeckter selbstklebender Träger nach Anspruch 1, dadurch gekennzeichnet, daß der Träger eine Folie aus thermoplastischem Kunststoff ist.

3. Abgedeckter selbstklebender Träger nach Anspruch 1 oder 2, dadurch gekennzeichnet, daß die geprägte Prägefolie eine geprägte, biaxial orientierte und thermofixierte Mehrschichtfolie aus Polyestern ist, wobei diese Folie zwei außenliegende Polyesterschichten aus Polyethylenterephthalat umfaßt, zwischen die eine niedriger schmelzende Polyesterschicht aus einem Copolyester mit Ethylenterephthalat- und Ethylenisophthalateinheiten eingebettet ist.

4. Abgedeckter selbstklebender Träger nach einem oder mehreren der Ansprüche 1 bis 3, dadurch gekennzeichnet, daß die Gesamtstärke der prägbaren Prägefolie 5 bis 1000 µm beträgt, wobei die Stärke der Zwischenschicht wenigstens 0,5 µm beträgt.

5. Abgedeckter selbstklebender Träger nach einem oder mehreren der Ansprüche 1 bis 4, dadurch gekennzeichnet, daß die geprägte Prägefolie Erhebungen von 5 bis 20 µm aufweist.

6. Abgedeckter selbstklebender Träger nach einem oder mehreren der Ansprüche 1 bis 5, dadurch gekennzeichnet, daß die Erhebungen punktoder linienförmig sind und daß 25 bis 100 Erhebungen pro mm² vorhanden sind.

7. Verfahren zur Herstellung von abgedeckten drucksensitive selbstklebenden Trägern, dadurch gekennzeichnet, daß auf die drucksensitiv selbstklebend ausgerüstete Oberfläche eines Trägers eine geprägte Prägefolie aufgebracht wird.

8. Verwendung einer geprägten Prägefolie als recyclebare Abdeckfolie für drucksensitive selbstklebende Träger.
